Europäisches Patentamt

European Patent Office

Office européen des brevets

(19)

(11) Veröffentlichungsnummer : **0 332 933 B1**

(12) **EUROPÄISCHE PATENTSCHRIFT**

(45) Veröffentlichungstag der Patentschrift :
24.05.95 Patentblatt 95/21

(51) Int. Cl.$^6$ : **G01N 27/416**, G01N 27/30

(21) Anmeldenummer : 89103575.0

(22) Anmeldetag : 01.03.89

(54) **Verfahren zur elektrischen Messung der Konzentration von Säuren.**

(30) Priorität : 18.03.88 DE 3809247

(43) Veröffentlichungstag der Anmeldung :
20.09.89 Patentblatt 89/38

(45) Bekanntmachung des Hinweises auf die
Patenterteilung :
24.05.95 Patentblatt 95/21

(84) Benannte Vertragsstaaten :
AT BE CH DE ES FR GB GR IT LI LU NL SE

(56) Entgegenhaltungen :
EP-A- 0 255 291
DE-A- 3 438 221
ELECTROCHIMICA ACTA, vol. 26, no. 7, 1981,
Great Britain, pp. 799-809 ; F. BECK et al. :
"Graphite intercalation compounds as positive electrodes in galvanic cells"
J. ELECTROCHEM. SOC., vol. 129, no. 11, November 1982, pp. 2409-2412 ; J. L. WEININGER
and J. L. BRIANT : "State-of-charge indicator
for lead-acid batteries"

(73) Patentinhaber : HAGEN BATTERIE AG
Coesterweg 45
D-59494 Soest (DE)

(72) Erfinder : Beck, Fritz, Prof. Dr.
Moltkestrasse 66
D-4100 Duisburg 1 (DE)
Erfinder : Krohn, Holger, Dr.
Schumannstrasse 1
D-4330 Mülheim 1 (DE)
Erfinder : Wagner, Rainer, Dr.
Dyckhoffsweg 19
D-4600 Dortmund 50 (DE)
Erfinder : Nann, Eberhard, Dr.
Schmückersweg 2
D-4770 Soest-Deiringsen (DE)

(74) Vertreter : Dipl.-Phys.Dr. Manitz Dipl.-Ing.
Finsterwald Dipl.-Ing. Grämkow Dipl.Chem.Dr.
Heyn Dipl.Phys. Rotermund Morgan,
B.Sc.(Phys.)
Postfach 22 16 11
D-80506 München (DE)

EP 0 332 933 B1

## Beschreibung

Die Erfindung betrifft ein Verfahren zur elektrischen Messung der Konzentration von Säuren, bei dem das konzentrationsabhängige elektrochemische Potential einer in der Säure angeordneten, mit einer ebenfalls in der Säure angeordneten inerten Gegenelektrode zusammenarbeitenden Meßelektrode gemessen und daraus die Konzentration abgeleitet wird.

Das Problem der Ladezustandsanzeige bei wiederaufladbaren Batterien, insbesondere Bleiakkumulatoren, ist bisher noch nicht annähernd befriedigend gelöst worden. Beim Bleiakkumulator ist bekanntlich die Säuredichte eine eindeutige Funktion des Ladezustands. Die diskontinuierliche Erfassung der Säuredichte mittels eines Aräometers ist umständlich. Es sind auch schon andere Verfahren zur kontinuerlichen Messung der Elektrolytkonzentration vorgeschlagen worden, z.B. die Erfassung der Längenausdehnung einer Ionenaustauscherfolie, die in den Elektrolyten eintaucht (DE-OS 22 54 207) oder die kontinuierliche Messung der relativen Luftfeuchtigkeit über dem Elektrolyten mit Hilfe der Leitfähigkeit eines Festelektrolyten (J. Electrochem. Soc. 129, 2409). Diese vorbekannten Verfahren zur kontinuierlichen Messung der Elektrolytkonzentration sind jedoch kompliziert und aufwendig. Die unmittelbare Messung der elektrolytischen spezifischen Leitfähigkeit führt deswegen nicht zu einer eindeutigen Konzentrationsbestimmung, weil die Meßwerte in der Mitte des nutzbaren Konzentrationsbereiches der Schwefelsäure über ein breites Maximum verlaufen. Es fehlt somit im Stand der Technik ein wirklich in jedem Fall anwendbares, zuverlässiges Verfahren zur Anzeige der noch in der Batterie bzw. dem Akkumulator vorhandenen Strommenge bzw. Energie. Vor allen Dingen eignen sich die bekannten Meßverfahren im allgemeinen nicht zur Bestimmung der Säurekonzentration in nach außen abgeschlossenen Systemen. Probleme bei der Säurekonzentrationsmessung bestehen aber auch dann, wenn der Elektrolyt als Gel vorliegt oder die Säure in einem Vlies gebunden ist.

Das Ziel der Erfindung besteht somit darin, ein Verfahren der eingangs genannten Gattung zu schaffen, mit dem eine kontinuierliche, genaue, sichere und relativ einfache Messung der Konzentration einer Säure, insbesondere Schwefelsäure in einem Bleiakkumulator über einen weiten Konzentrationsbereich möglich ist, wobei das Meßergebnis in Form eines elektrischen Signals vorliegen soll. Das Verfahren soll sich auch zur Verwendung in nach außen abgeschlossenen Systemen, insbesondere keine Einfüllöffnungen aufweisenden Bleiakkumulatoren oder für Akkumulatoren eignen, in denen der Elektrolyt als Gel oder in einem Vlies gebunden vorhanden ist.

Zur Lösung dieser Aufgabe sieht die Erfindung vor, daß eine zumindest überwiegend aus kristallinem Graphit bestehende Meßelektrode in einer mit Graphit Graphitintercalations-Verbindungen bildende Anionen aufweisenden Säure angeordnet wird, daß die Meßelektrode intercaliert wird, indem in der Meßelektrode bei variablem positivem Potential ein Strom von solcher Größe erzeugt wird, daß die Anionen der Säure mit dem Graphit Graphitintercalations-Verbindungen bilden können, daß der Strom so lange aufrechterthalten wird, bis sich oberflächlich die Graphitintercalations-Verbindung gebildet hat, daß das sich bei Beginn der Bildung der Graphitintercalations-Verbindung einstellende Meßelektrodenpotential gemessen und als Maß für die Säurekonzentration verwendet wird, und daß, bevor eine über die Oberfläche wesentlich hinausgehende Bildung der Graphitintercalations-Verbindung eintritt, ein negatives Potential von solcher Größe an die Meßelektrode angelegt wird, daß die Meßelektrode wieder deintercaliert wird. Der Erfindungsgedanke ist also darin zu sehen, daß die Bildung von Graphitintercalations-Verbindungen gerade nur in dem Maße zugelassen wird, daß das mit der plötzlichen Stromerhöhung beim Beginn der Bildung der Graphitintercalations-Verbindungen einstellende relativ konstante Potential an der Meßelektrode gemessen wird und daß sofort nach dieser Messung durch Anlegen eines negativen Potentials die Graphitintercalations-Verbindungen so schnell wie möglich wieder beseitigt werden, um eine Korrosion der Meßelektrode und damit eine vorzeitige Zerstörung dieser Elektrode wirksam zu vermeiden.

Es ist bereits bekannt, daß Graphit Graphit-Intercalationsverbindungen bilden kann. Es handelt sich hierbei um einen reversiblen, elektrochemischen Prozeß. Weiter ist bereits die starke konzentrationslineare Abhängigkeit des Intercalationspotentials bekannt (Electrochim Acta 26, 799 bis 809; 1981). Bei einer Steigerung der Säurekonzentration um 1 mol/l wird das Potential der aus Graphit bestehenden Elektrode um etwa 60 mV bei Schwefelsäure und um etwa 30 mV bei Flußsäure in negativer Richtung über den ganzen Konzentrationsbereich von 0,1 M bis 100 % verschoben.

Eine stationäre Elektrode aus einer Graphitintercalationsverbindung, die in eine die Anionen liefernde Säure eintaucht, eignet sich jedoch nicht als Meßelektrode für einen Dauerbetrieb, da eine langsame Selbstentladung stattfindet. Da das Potential dieser Elektrode auch vom Ladezustand abhängt, wobei sich das Potential im reversiblen Bereich um ca. 500 mV ändert, ist eine eindeutige Konzentrationsmessung nicht möglich. Bei vollständiger Entladung würde das Potential bis in den Bereich des Chinons/Hydrochinons abfallen. Beim Überladen würde das Graphitmaterial irreversibel unter Bildung von Graphitoxid zerstört werden.

Aufgrund des erfindungsgemäßen Verfahrens ist aber eine sichere elektrische Proportionalmessung der Säuredichte auch im Langzeiteinsatz möglich, weil die Meßelektrode jeweils in einer Periode nur gerade so weit aufgeladen wird, daß eine Messung des Intercalationspotentials möglich ist. Nach der betreffenden Messung wird die Meßelektrode sofort wieder entladen, wodurch eine Zerstörung des Graphitmaterials wirksam vermieden ist und ein exakter und genauer Zusammenhang zwischen dem Intercalationspotential und der Konzentration gewährleistet wird.

Wesentlich für die Erfindung ist also, daß die Graphitelektrode bzw. -sonde stets nur oberflächlich intercaliert wird und daß nach Feststellung des Intercalationspotentials sofort wieder deintercaliert wird.

Unter Intercalieren wird das Einlagern von Anionen, z.B. anodischem $HSO_4-$ und undissoziierten $H_2SO_4$ verstanden gemäß der Reaktion:

$$C_x + HSO_4^- + 2\ H_2SO_4 \rightleftharpoons \left[ C_x^+ \quad HSO_4^- \quad . \quad 2\ H_2SO_4 \right] + e^-.$$

Das Potential, bei dem die Einlagerung beginnt, wird Intercalationspotential genannt; es ist relativ stark von der Säurekonzentration bzw. Säuredichte abhängig.

Da also die prinzipiell mögliche und besonders einfache Messung des Ruhepotentials der Graphitintercalationsverbindung wegen der begrenzten Stabilität dieser Verbindungen in verdünnten Säuren nicht praktikabel ist, wird die erfindungsgemäße dynamische Impulsmethode angewendet, bei der am Graphitsensor bzw. an der Graphitmeßelektrode alternierend intercaliert und deintercaliert wird. Die Elektrode wird auf diese Weise immer wieder in den stabilen, ungeladenen Zustand zu rückgeführt. Die nach dem erfindungsgemäßen Verfahren arbeitende Meßelektrode besitzt eine ungewöhnlich hohe Lebensdauer. Das Verfahren ist zur Konzentrationsbestimmung aller Säuren geeignet, deren Anionen intercaliert werden, z.B. Flußsäure, Perchlorsäure, Schwefelsäure etc. Bei Schwefelsäure ergibt sich ein Einsatzbereich für Konzentrationen größer als 0,2 M und Temperaturen bis 65° C.

Eine erste praktische Ausführungsform des erfindungsgemäßen Verfahrens ist durch die Ansprüche 1, 2 gekennzeichnet. Das dort definierte Meßprinzip wird als galvanostatisches Meßprinzip bezeichnet. Ein großer Vorteil dieses Meßverfahrens besteht darin, daß schon ein Impuls zur Erfassung des Intercalationspotentials ausreichend ist, so daß die Meßelektrode bis zur nächsten Messung beim Ruhepotential verbleiben kann. Das galvanostatische Meßprinzip ist besonders vorteilhaft, weil es zum einen auf sehr einfache Weise praktisch durchgeführt werden kann und zum anderen besonders genaue Konzentrationsmeßergebnisse liefert, und zwar unabhängig davon, ob die Meßelektrode von einer Säure niedriger Konzentration in eine Säure hoher Konzentration gebracht wird oder umgekehrt.

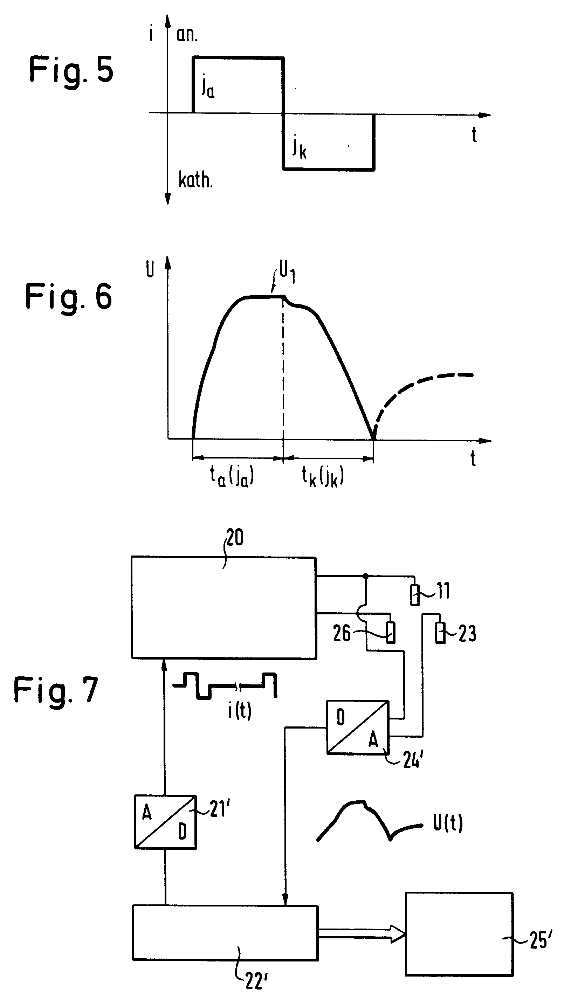

Eine weitere praktische Ausführungsform, die als potentiostatische Messung bezeichnet wird, ist durch die Patentansprüche 3 bis 5 gekennzeichnet. Sobald das Basispotential einen Wert erreicht hat, daß am Ende der positiven Impulse ein deutlicher Intercalationsstrom fließt, ist das Intercalationspotential erreicht und kann zur Bestimmung der Säurekonzentration ausgewertet werden. Zur Feststellung des Zusammenhanges zwischen dem Intercalationspotential und der Konzentration können für jede zur Verfügung stehende Meßelektrode und die zugehörige Säure Eichkurven angefertigt werden, wie sie beispielsweise aus Fig. 5 auf Seite 803 von Electrochim. Acta 26, 1981, bekannt sind.

Vorteilhafte Zusammensetzungen der Meßelektroke sind durch die Ansprüche 6, 7 gekennzeichnet.

Anspruch 8 definiert eine besonders bevorzugte Anwendung des erfindungsgemäßen Verfahrens bei der Säuredichtebestimmung von Bleiakkumulatoren. In diesem Fall kann die Meßelektrode zusätzlich auch noch als Säurestandsmesser herangezogen werden.

Eine bevorzugte Ausführungsform einer Meßelektrode für das erfindungsgemäße Verfahren ist durch Anspruch 9 gekennzeichnet.

Anspruch 10 definiert eine bevorzugte Vorrichtung zur Ausführung des erfindungsgemäßen Verfahrens.

Die Erfindung wird im folgenden anhand von Beispielen und der Zeichnung im einzelnen beschrieben; in dieser zeigt:

Fig. 1      eine schematische Darstellung eines Ausschnitts eines mit verdünnter Schwefelsäure gefüllten Bleiakkumulators mit drei für die Ausführung des erfindungsgemäßen Verfahrens erforderlichen Elektroden,

Fig. 2      ein Potentialzeitdiagramm für die potentiostatische Ausführungsform des erfindungsgemäßen Verfahrens,

Fig. 3      das zu Fig. 2 gehörende Strom-Zeitdiagramm,

Fig. 4      ein Blockdiagramm einer Vorrichtung zur Durchführung des erfindungsgemäßen potentiostatischen Meßverfahrens,

EP 0 332 933 B1

Fig. 5      ein Strom-Zeit-Diagramm der galvanostatischen Ausführungsform des erfindungsgemäßen Meßverfahrens,

Fig. 6      das zu Fig. 5 gehörende Potential-Zeitdiagramm,

Fig. 7      ein Blockschaltbild einer Vorrichtung zur Ausführung des galvanostatischen Meßverfahrens gemäß der Erfindung,

Fig. 8      einen vertikalen Mittellängsschnitt einer weiteren Ausführungsform einer Meßelektrode zur Ausführung des erfindungsgemäßen Meßverfahrens,

Fig. 9      einen Schnitt nach Linie IX-IX in Fig. 8 und

Fig. 10      ein Eichdiagramm einer mit Schwefelsäure zusammenwirkenden Graphit-Meßelektrode gemäß vorliegender Erfindung, wobei auf der Abszisse die Schwefelsäurekonzentration in Mol/l und auf der Ordinate das Potential der Graphit-Meßelektrode gegen die $Hg/Hg_2 SO_4/1$ M $H_2SO_4$-Bezugselektrode in V aufgetragen sind.

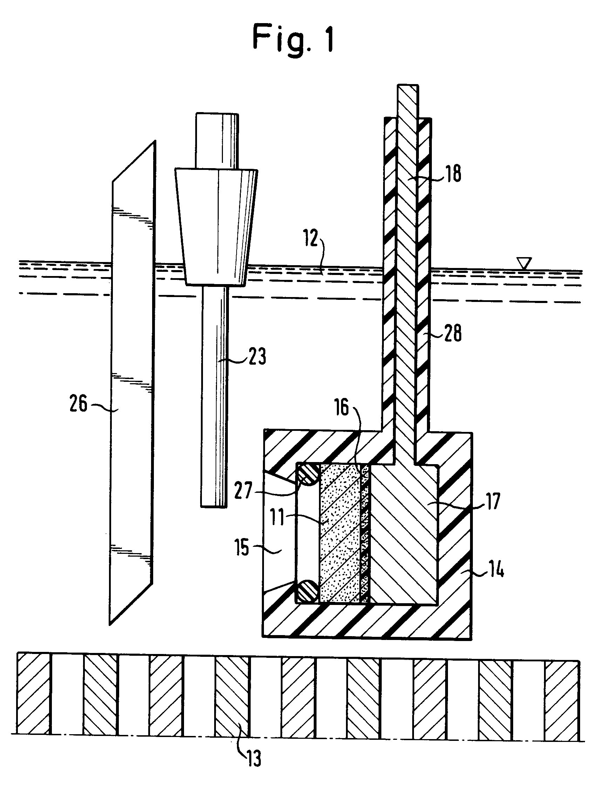

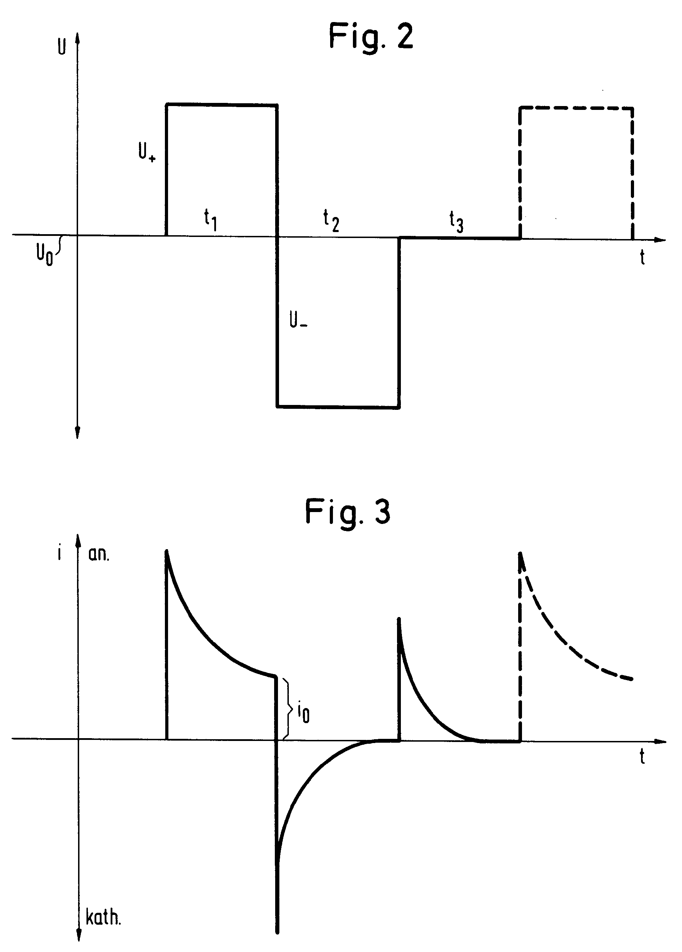

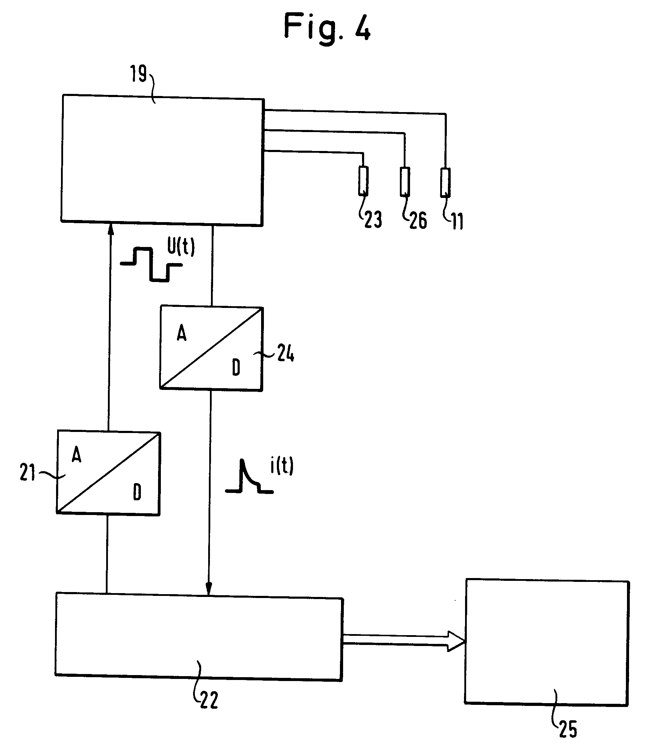

Nach Fig. 1 sind im nicht dargestellten Gehäuse eines mit Schwefelsäure 12 gefüllten Bleiakkumulators oberhalb des aus negativen und positiven Platten sowie Separatoren bestehenden Plattensatzes 13 eine aus kristallinem Graphit bestehende Meßelektrode 11, eine ebenfalls aus einem gegenüber dem Elektrolyten und den angelegten Potentialen inerten z.B. kristallinem Graphit oder Blei bestehenden Gegenelektrode 26 und eine z.B. aus $Hg/Hg_2SO_4$ bestehende Referenzelektrode 23 angeordnet, die in der später anhand von Fig. 4 erläuterten Weise von einem Potentiostat 19 mit Spannung und Strom versorgt werden. Vom Potentiostat 19 wird zwischen die Referenzelektrode 23 und die Meßelektrode 11 ein definiertes Potential, wie es weiter unten anhand von Fig. 2 erläutert wird, angelegt, während zwischen der Meßelektrode 11 und der Gegenelektrode 26 die Messung des anhand von Fig. 3 erläuterten Stromverlauf erfolgt.

Die plattenförmige Graphit-Meßelektrode 11 ist hinter der seitlichen Öffnung 15 eines aus säurefestem Kunststoff bestehenden Gehäuses 14 angeordnet und durch einen zwischen dem Rand der Öffnung 15 und der Meßelektrode 11 vorgesehenen O-Ring 27 zum Inneren des Gehäuses 14 abgedichtet. Die Vorderseite der plattenförmigen Meßelektrode 11 ist somit der Schwefelsäure 12 ausgesetzt. An der Rückseite der plattenförmigen Meßelektrode 11 befindet sich eine Sperrplatte 16 z.B. aus rußgefülltem Kunststoff, welche sowohl mit der Meßelektrode 11 als auch mit einem auf der Rückseite angeordneten Kupferblock 17 in elektrisch leitender Verbindung steht. Der Kupferblock 17 und die Sperrplatte 16 sind ebenfalls eng vom Kunststoffgehäuse 14 umschlossen. Eine mögliche Diffusion von intercalierten Anionen durch die Meßelektrode 11 hindurch zum Kupferkontakt ist durch eine zwischengelegte rußgefüllte Polycarbonatfolie vollständig unterbunden. Die Sperrplatte 16 kann auch aus einer dünnen Gold- oder Platinfolie oder einer Beschichtung mit Hartstoffen wie Siliziumnitrid oder Titancarbid bestehen.

Das Kunststoffgehäuse wird durch ein oben aus der Schwefelsäure 12 hinausragendes Rohr 28 aus säurefestem Kunststoff gehalten, in dessen Innern sich ein mit dem Kupferblock 17 in elektrisch leitender Verbindung stehender Kupferleiter 18 befindet, der an den Potentiostaten 19 nach Fig. 4 angeschlossen wird.

Erfindungsgemäß kann im Bereich der Meßelektrode 11 auch noch ein nicht-dargestellter Thermofühler am oder im Gehäuse 14 integriert sein, um die notwendigen Temperaturkorrekturen vornehmen zu können.

Bei der Elektrode 23 handelt es sich um eine $Hg/Hg_2SO_4/1$ M $H_2SO_4$-Bezugselektrode (M bedeutet Mol/Liter), während die Gegenelektrode 26 die Form eines Bleiblechstreifens annimmt.

Nach Fig. 4 werden die Elektroden 11, 23, 26 vom Potentiostaten 19 in der im folgenden im einzelnen beschriebenen Weise mit geeigneten Potentialen und Strömen versorgt. Der Potentiostat wird über einen Digital-Analogwandler 21 von einem Rechner 22 (Fig. 4) gesteuert. Die zwischen den Elektroden fließenden Ströme werden vom Potentiostaten 19 erfaßt und über einen Analog/Digitalwandler 24 an den Rechner 22 gegeben. Das Ausgangssignal des Rechners 22 wird an eine Ladezustandsanzeige 25 geliefert, welche den Ladezustand in geeigneter Weise, z.B. auf der Skala eines Meßinstrumentes, zur Anzeige bringt.

Der rechnergesteuerte Potentiostat 19 legt an die Meßelektrode 11 eine Spannung an, wie sie in Fig. 2 schematisch wiedergegeben ist. Einem Basispotential $U_0$ werden konstante Spannungs-Impulse $U_+$ bzw. $U_-$ in der aus Fig. 2 ersichtlichen Weise überlagert. Der positive Spannungsimpuls $U_+$ besitzt gegenüber dem Basispotential $U_0$ eine Amplitude von 20 bis 100 mV. Der Spannungsimpuls muß so beschaffen sein, daß die Flanke der Strom-Spannungskurve etwas angeschnitten wird.

Der Potentiostat 19 mißt außerdem den durch die Meßelektrode 11 fließenden Strom i, welcher in der zeitlich richtigen Zuordnung in dem Diagramm der Fig. 3 wiedergegeben ist.

Man erkennt, daß nach dem Beginn des positiven Spannungsimpulses $U_+$ der Strom schlagartig ansteigt. Das Potential $U_0$ wird dabei so begrenzt, daß beim Erscheinen des hinzuaddierten Spannungsimpulses $U_+$ nur über einen sehr kurzen Zeitraum ein relativ kleiner Strom fließt, d.h., daß nur sehr wenig in den Intercalationsbereich hineingefahren wird. Die vom Potentiostaten vorgenommene Steuerung des Potentials $U_0$ wird also so gewählt, daß man immer im ersten Anstiegsbereich der Stromdichte-Potentialkurve bleibt. Im

4

einzelnen läuft das Meßverfahren folgendermaßen ab: Ausgehend von einem ersten Wert für $U_0$ wird das Potential entsprechend Fig. 2 um $U_+$ erhöht. Falls der Strom am Ende des $U_+$-Impulses unterhalb eines vorgegebenen Grenzwertes liegt, wird $U_0$ um einen bestimmten Betrag $\Delta U$ erhöht und der Meßzyklus wiederholt. Die Steigerung von $U_0$ um kleine Beträge wird so lange fortgesetzt, bis der Strom am Schluß des Impulses $U_+$ einen vorgegebenen Grenzwert $i_0$ erreicht oder überstiegen hat. Die Größe von $i_0$ ist so zu wählen, daß der Strom am Ende des $U_+$-Impulses bereits einen merklichen Anteil am Intercalationsstrom enthält. Der beim Beginn des $U_+$-Impulses vorhandene relativ hohe Strom klingt gemäß Fig. 3 schnell ab, da in ihm die unvermeidliche Aufladung der elektrochemischen Doppelschicht enthalten ist; der Strom enthält aber auch eine durch Konzentrationspolarisation rasch abklingende Intercalation der Anionen.

In diesem Zusammenhang ist darauf hinzuweisen, daß die Doppelschichtkapazität einer Graphit-Meßelektrode der Erfindung um den Faktor 1000 größer ist als bei üblichen Elektroden. Die Impulszeit $t_1$ wird so gewählt, daß nach Ablauf dieser Zeit nur noch ein reiner Intercalationsstrom $i_0$ fließt, d.h. zu diesem Zeitpunkt ist die Doppelschichtkapazität praktisch aufgeladen. $i_0$ wird vom Rechner 22 (Fig. 4) als Regelgröße benutzt.

Ist der vorbestimmte Intercalationsstrom $i_0$ nach der Zeit $t_1$ erreicht, so wird nach Fig. 2 der negative Spannungsimpuls $U_-$ angelegt, dessen Absolutwert den Spannungsimpuls $U_+$ deutlich übersteigt. Die Meßelektrode 11 wird auf diese Weise sofort wieder entladen. Der Strom $i$ klingt innerhalb einer zweiten zeitlichen Periode $t_2$ praktisch auf 0 ab. Sobald der Wert 0 erreicht ist, ist auch der entsprechend zeitlich begrenzte negative Spannungsimpuls $U_-$ gemäß Fig. 2 beendet. Die Meßelektrode 11 befindet sich jetzt wieder im Ausgangszustand auf dem Basispotential $U_0$.

Die Meßelektrode 11 bleibt nunmehr für eine Zeit $t_3$ auf dem Basispotential $U_0$. Nach Ablauf dieser Ruheperiode wird ein neuer Impulszyklus gestartet. Es ist im Falle der Verwendung von Schwefelsäure zweckmäßig, die Spannungs- und Zeitgrößen innerhalb der folgenden Bereiche zu halten:

$U_+$ : 20 bis 100 mV

$U_-$ : 150 bis 500 mV

$t_1$ : 0.2 bis 2 sec

$t_2$ : 1 bis 5 sec

$t_3$ : 2 sec.

$i_0$ wird auf wenige mA. $cm^{-2}$ beschränkt. Meßtechnisch erfaßt wird vom Rechner 22 (Fig. 4) die von der Konzentration eindeutig abhängige Größe $U_0$, welche deswegen für die Messung herangezogen werden kann, weil die das Intercalationspotential darstellende Größe $U_0 + U_+$ zu $U_0$ in einem festen Verhältnis steht, denn $U_+$ stellt einen konstanten Wert dar.

Der Rechner 22 nach Fig. 4 wählt das Basispotential $U_0$ automatisch so, daß $i_0$ als Regelgröße nicht überschritten wird.

Auf der Ladezustandsanzeige 25 wird vom Rechner der Ladezustand bzw. die Säurekonzentration in Abhängigkeit von dem festgestellten Intercalationspotential dargestellt.

Taucht man die Meßelektrode 11 in einen Elektrolyten unbekannter Schwefelsäurekonzentration, so benötigt das Regelsystem ca. 10 Pulssequenzen, bis die Intercalationsgrenze erreicht wird. $U_0$ wird bei konstantem $U_+$ schrittweise um ein $\Delta U$ (welches zweckmäßig Werte zwischen 0 und 10 mV annehmen kann) nach und nach erhöht, wobei der neue Abgleich (Sollwert von $i_0$ ist 0,8 mA/cm²) realisiert wird. Bei allmählich sich ändernden Konzentrationen sind sehr viel weniger Impulse bis zur Erreichung des Regelpunkts erforderlich.

Ein zu dem potentiostatischen Meßverfahren alternatives galvanostatisches Meßprinzip wird im folgenden anhand der Fig. 5 bis 7 beschrieben. Ein Rechner 22' steuert über einen Digital/Analog-Wandler 21' einen Galvanostaten 20, der die Meßelektrode 11 mit einem Impulsstrom gemäß Fig. 5 beaufschlagt. Der rechteckförmige Impulsstrom besteht aus positiven Halbwellen $j_a$ und negativen Halbwellen $j_k$. Während beider Halbwellen wird eine konstante geringe Stromdichte von 0,01 bis 10 mA . $cm^{-2}$ eingehalten. Während der positiven Halbwelle wird die Meßelektrode 11 in anodischer Richtung polarisiert. Hierbei steigt das Potential $U$ innerhalb einer Zeit $t_a$ bis auf das Intercalationspotential $U_1$ an; das Potential der Meßelektrode 11 durchläuft hierbei einen weiten Potentialbereich in der Größenordnung von etwa 1 V, wobei in komplizierter Weise die Aufladung der elektrochemischen Doppelschicht, die Umladung der chinoiden Oberflächengruppen und die Bildung von höheren Intercalationsstufen an der Graphitoberfläche erfolgen. Schließlich wird jedoch ein Abschnitt nahzu konstanten Potentials $U_1$ erreicht. Polt man den Strom kurze Zeit nach Erreichen des Intercalationspotentials $U_1$ um (negative Halbwelle $j_k$), so wird die Meßelektrode 11 wieder entladen, wozu eine Zeit $t_k$ erforderlich ist.

Die exakte Bestimmung des Intercalationspotentials $U_1$ erfolgt in der Weise, daß im abflachenden Teil der Potentialkurve nach Fig. 6 im Abstand von beispielsweise 0,2 sec der Potentialanstieg gemessen wird. Fällt dieser zum erstenmal unter 5 mV (also $dU/dt < 25$ mV . $sec^{-1}$, so wird dieser Wert als Endwert $U_1$ festgehalten. Bei einer vorteilhaften Variante ist $U_1$ der Durchschnittswert der beiden letzten Endwerte unter 5 mV pro 0,2 sec.

Bei einer dritten Variante wird erst umgepolt, wenn der Potentialanstieg zum drittenmal nacheinander unter 5 mV in 0,2 sec fällt, und es wird der Durchschnittswert aus den beiden letzten bzw. aus den drei letzten Messungen ermittelt. Beim Erreichen des so definierten $U_1$-Wertes wird der Strom umgepolt.

Das Stromprogramm nach Fig. 5 wird durch den in Fig. 7 dargestellten Rechner 22' vorgegeben. Die Elektroden 11, 23, 26 sind über eine Analog/Digital-Wandler 24' an den Rechner 22' angeschlossen, welcher die Potential/Zeit-Kurve im vorstehenden Sinne analysiert. Der $U_1$-Wert wird schließlich vom Rechner in der Ladezustandsanzeige 25' als Maß für die Säurekonzentration zur Anzeige gebracht.

Ein großer Vorteil des galvanostatischen Meßverfahrens liegt darin, daß nur ein Paar von positivem und negativem Stromimpuls zur Erfassung des Intercalationspotentials $U_1$ ausreichend ist, so daß die Meßelektrode 11 bis zur nächsten Messung beim Ruhepotential verbleiben kann.

Typische Werte für das vom Rechner 22' nach Fig. 7 gelieferte und in Fig. 5 dargestellte Impulsprogramm sind:

$$i_a \ = \ i_k \ = \ 1 \ mA$$

(Oberfläche A der Meßelektrode 11 $\sim$ 0,5 cm²)

$$t_a \ = \ t_k \ = \ 1 \ - \ 10 \ sec$$

$$t_0 \ = \ 5 \ min.$$

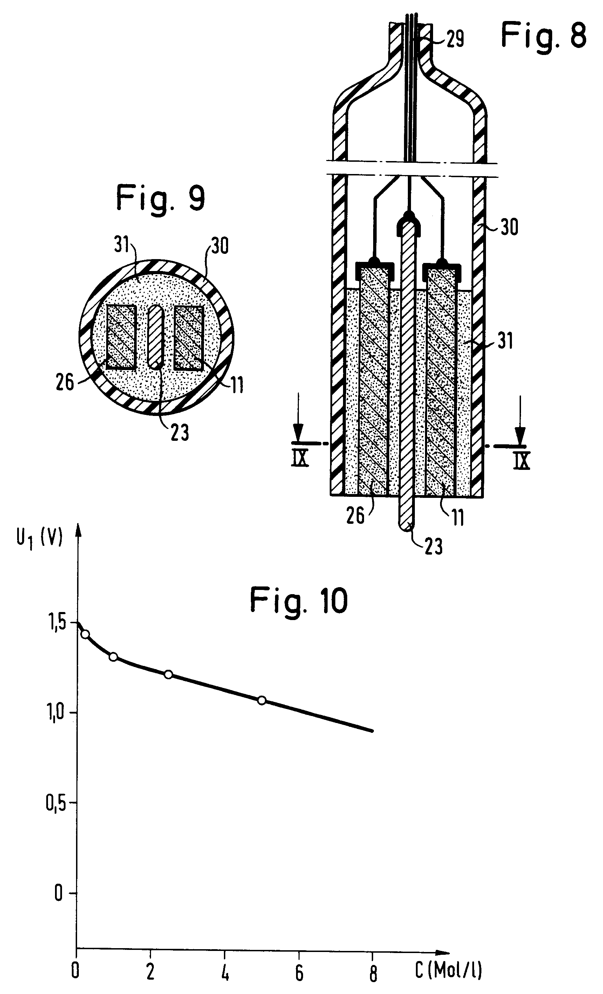

Eine für den praktischen Einsatz besser als die Meßelektrode nach Fig. 1 einsetzbare Meßelektrode 11, die wesentlich kleiner gebaut werden kann, ist in den Fig. 8 und 9 dargestellt.

In ein oben die Zuleitungen 29 zu den Elektroden 11, 23, 26 einlassenden rohrförmigen Gehäuse 30 aus Polypropylen, welches unten offen ist, sind nebeneinander die Meßelektrode 11 und die Gegenelektrode 26 sowie dazwischen die Referenzelektrode 23 in Epoxidharz 31 voneinander isoliert eingegossen. Die Elektroden 11, 26 weisen relativ große rechteckige und gleiche Querschnitte auf, während die dazwischen angeordnete Bezugselektrode 23 einen wesentlich kleineren länglichen Querschnitt besitzt und parallel zu den ihrerseits zueinander parallelen Elektroden 11, 26 angeordnet ist.

Während die Meßelektrode 11 und die Gegenelektrode 26 aus Naturgraphit-Verbundmaterial mit z.B. 80 % Naturgraphitflocken und 20 % Polypropylen bestehen, ist die Referenzelektrode 23 aus Cd hergestellt. Letztere Elektrode 23 steht über die senkrecht zur Achse des Gehäuses 30 abgeschnittenen Elektroden 11, 26 nach unten in der aus Fig. 8 ersichtlichen Weise etwas vor.

Dadurch, daß die beiden Elektroden 11, 26 am unteren Ende des Gehäuses senkrecht zu ihrer Achse abgeschnitten sind, liegen für die Intercalation optimale Voraussetzungen vor.

Die oberen Enden der drei Elektroden 11, 23, 26 sind verkupfert und mit einem verlöteten Drahtkontakt versehen. Ggfs. kann auch hier eine Diffusionssperre in Form einer rußgefüllten Kunststoffolie wie beim Ausführungsbeispiel nach Fig. 1 vorgesehen sein.

Die Referenzelektrode 23 kann auch eine $Hg/Hg_2SO_4$-Elektrode zweiter Art sein.

Bevorzugt bestehen die Elektroden 11, 23, 26 auch bei anderer Realisierung als nach den Fig. 8, 9 aus den vorstehend beschriebenen Materialien.

Im folgenden wird nochmals das vorzugsweise verwendete Elektrodenmaterial zusammenfassend dargestellt:

Die Meßelektrode 11 besteht ganz oder teilweise aus einem graphitischen Material. Sie kann auch aus einem synthetischen Metall wie Poly-p-phenylen oder Polythiophen gebildet werden.

Die Gegenelektrode 26 besteht aus einem leitenden, gegen Säuren inerten Material, wie z.B. den Materialien der Meßelektrode, ferner aus Blei, Gold, Platin, platiniertem Tantal, Hartmetallen wie Siliziumnitrid oder Titancarbid. Vorteilhaft kann sie auch aus rußgefüllten Kunststoffen gebildet werden.

Die Bezugselektrode 23 muß mit den Säurelösungen kompatibel sein und ein konstantes Bezugspotential halten. Im folgenden werden einige Systeme beispielhaft genannt:

a) Saure Quecksilber/Quecksilber-I-Sulfat-Elektrode;

b) Cadmiumelektrode;

c) Graphitelektrode mit einer hohen Oberflächenkonzentration an chinoiden Oberflächengruppen. Sie wird durch 1- bis 24-stündige Wechselstrompolarisatiion (50 Hz) einer Graphitelektrode bei einer Stromdichte von 10 mA/cm² in 1 M $H_2SO_4$ formiert und stellt eine besonders preisgünstige Variante einer Bezugselektrode dar.

Fig. 10 zeigt eine typische Abhängigkeit des Intercalationspotentials einer Graphit-Meßelektrode 11 in Abhängigkeit von der Schwefelsäurekonzentration in Mol/l.

Das Intercalationspotential $U_1$ wurde nach dem anhand der Fig. 5 bis 7 beschriebenen galvanostatischen Meßverfahren bestimmt.

Als Säuren, deren Konzentrationen in einem weiten Bereich technisch erfaßt werden können, eignen sich alle Beispiele, die Anionen besitzen, die sich intercalieren lassen. Hierzu gehören:

| Schwefelsäure | $H_2SO_4$ |
| Perchlorsäure | $CH10_4$ |
| Flußsäure | $H_2F_2$ |
| Tetrafluoroborsäure | $HBF_4$ |
| Trifluoressigsäure | $CF_3COOH$ |
| Methansulfonsäure | $CH_3SO_3H$ und |
| Hexafluorphosphorsäure | $HPF_6$. |

Die erfindungsgemäße Meßelektrode arbeitet sicher im Temperaturbereich zwischen 0 und 50° C. Bei Temperaturen unter 0° C kann sich die Einstellzeit verlangsamen. Bei Temperaturen über 50° C kann evtl. die Anzeige ungenau werden, weil die Strom-Spannungskurve nicht mehr so steil ansteigt und weil die Selbstentladung groß wird.

Die Erfindung wird im folgenden auch noch anhand von zwei Beispielen erläutert:

Beispiel 1

Eine Anordnung nach Fig. 1 mit einer Meßelektrode 11 in Form einer runden Platte aus einem Verbundwerkstoff von 20 Gew.-% Polypropylen und 80 Gew.-% Naturgraphitflocken besaß einen Durchmesser von 10 mm und eine Dicke von 3 mm. Sie wurde zur Messung der Schwefelsäurekonzentration im Bereich von 0,2 Mol/l bis 5 Mol/l verwendet. Vor dem Gebrauch wird die Meßelektrode 11 auf der der Schwefelsäure 12 (Fig. 1) zugewandten Seite durch Schmirgeln leicht aufgerauht und zur Formierung in der in die Halterung nach Fig. 1 eingebauten Position 10 Stunden lang mit einer konstanten Stromdichte von $\pm$ 1 mA . cm$^{-2}$ und einer Frequenz von 0,5 Hz in 7 M $H_2SO_4$ einer galvanostatischen Wechselpolarisation unterworfen.

Anschließend wurden die Lade- und Entladezyklen einer technischen Bleibatterie mit Hilfe eines Laborroboters simuliert. Dieser taucht die Sonde jeweils in Bechergläser mit 1 l $H_2SO_4$ der Konzentrationen 5 Mol/l, 2,5 Mol/l, 1 Mol/l, 0,5 Mol/l bzw. 0,2 Mol/l.

Es wurde das anhand der Fig. 5 bis 7 erläuterte galvanostatische Meßverfahren angewendet mit folgenden Werten:

$$i_a = 2 \text{ m A/cm}^2$$
$$i_k = 2 \text{ m A/cm}^2$$
$$t_a = 1 - 10 \text{ sec}$$

Die $U_0'$-Werte wurden im Abstand von 5 Minuten, also zwölfmal pro Tauchung ausgedruckt. In den Austauchperioden wurde die Meßelektrode automatisch vom Galvanostaten 20 getrennt, um eine Überlastung der Meßelektrode 11 zu vermeiden.

Die $U_0'$-Ausdrücke nach 1000 Stunden, entsprechend 100 simulierten Lade- und Entladezyklen wurden ausgewertet. Dabei ergab sich folgendes Bild, wobei in der ersten Spalte die molare Konzentration der Schwefelsäure und in der zweiten Spalte die $U_0$-Werte angegeben sind:

| c (Mol/l) | $U_1$ (V) |
|-----------|-----------|
| 5,0 | 1.067 |
| 2,5 | 1,209 |
| 1,0 | 1,303 |
| 0,5 | 1,371 |
| 0,2 | 1,437 |

Als Bezugselektrode 23 wurde die $Hg/Hg_2SO_4$/1 M $H_2SO_4$-Elektrode eingesetzt.

Beispiel 2

Bei einer Produktionsanlage für wässrige Flußsäure mit einer Konzentration von 60 Gew.-% wurde die Säurekonzentration durch Zudosierung von HF-Gas bzw. $H_2O$ konstant gehalten. Zur Steuerung der Dosiereinrichtungen wurde in das Produkt eine Meßelektrode gemäß der Erfindung eingetaucht. Die Arbeitsweise der Meßelektrode 11 erfolgte nach dem potentiostatischen Prinzip der in Form einer Spannung $U_0$ angezeigte Meßwert, der zur Säurekonzentration proportional ist, gab über eine lange Zeit die Konzentration der Flußsäure exakt wieder.

**Patentansprüche**

1. Verfahren zur elektrischen Messung der Konzentration von Säuren, bei dem das konzentrationsabhängige elektrochemische Potential einer in der Säure angeordneten, mit einer ebenfalls in der Säure angeordneten inerten Gegenelektrode zusammenarbeitenden Meßelektrode gegen eine geeignete Bezugselektrode gemessen und daraus die Konzentration abgeleitet wird, dadurch **gekennzeichnet**, daß eine zumindest überwiegend aus kristallinem Graphit bestehende Meßelektrode (11) in einer Säure (12) mit intercalierbaren Anionen angeordnet wird, daß die Meßelektrode (11) intercaliert wird, indem ein anodischer Strom geeigneter Größe durch die Meßelektrode (11) geleitet wird, daß der Strom so lange aufrechterhalten wird, bis sich oberflächlich die Graphitintercalations-Verbindung gebildet hat, daß das sich bei Beginn der Bildung der Graphitintercalations-Verbindung einstellende Meßelektrodenpotential gemessen und als Maß für die Säurekonzentration verwendet wird, und daß, bevor eine über die Oberfläche wesentlich hinausgehende Bildung der Graphitintercalations-Verbindung eintritt, der Strom umgepolt wird oder ein negatives Potential von solcher Größe an die Meßelektrode (11) angelegt wird, daß die Meßelektrode (11) wieder deintercaliert wird, und daß vorzugsweise die Meßelektrode (11) unter Messung des Potentials mit einer konstanten geringen Stromdichte in anodischer Richtung polarisiert wird, bis ein Abschnitt erreicht wird, der sehr flach und insbesondere so flach verläuft, daß innerhalb von 0,2 sec der Potentialanstieg unter 5 mV (dU/dt < 25 mV/sec) fällt, wobei das Potential ($U_1$), bei dem dies zum erstenmal der Fall ist, als Maß für die Säurekonzentration verwendet wird, und daß zweckmäßigerweise anschließend mit einer konstanten geringen Stromdichte in kathodischer Richtung deintercaliert wird, wobei bevorzugt der Strom nach Erreichen des Abschnittes mit konstant bleibendem Potential umgepolt wird.

2. Verfahren nach Anspruch 1, dadurch **gekennzeichnet,** daß die Stromdichte 0,01 bis 10 mA . cm$^{-2}$, vorzugsweise 1 bis 3 mA . cm$^{-2}$ und insbesondere etwa 2 mA . cm$^{-2}$ beträgt und/oder daß nach der Deintercalation eine stromfreie Pause von vorzugsweise mehreren Minuten, insbesondere 5 Minuten vorgesehen ist.

3. Verfahren nach Anspruch 1, dadurch **gekennzeichnet**, daß an die Meßelektrode (11) ein Basispotential ($U_0$), dem abwechselnd positive und negative Impulse ($U_+$, $U_-$) überlagert sind, angelegt und der resultierende Strom gemessen wird, wobei das Basispotential ($U_0$) von einem Wert, wo beim Auftreten des positiven Impulses noch keine wesentliche Bildung von Graphitintercalationsverbindungen auftritt, bis zu einem Wert gesteigert wird, wo beim Auftreten des positiven Impulses sprungartig ein Intercalationsstrom ($i_0$) fließt, gesteigert wird, und daß das Basispotential ($U_0$) bzw. die Summe des Basispotentials ($U_0$) und des vorzugsweise konstanten positiven Impulses ($U_+$) als Maß für die Konzentration verwendet wird, wobei insbesondere die positiven Impulse ($U_+$) eine Amplitude von 20 bis 100 mV, vorzugsweise 30 bis 70 mV und insbesondere etwa 50 mV aufweisen, und/oder die negativen Impulse ($U_-$) eine Amplitude von 150 bis 500 mV, vorzugsweise 150 bis 250 mV und ins besondere etwa 200 mV aufweisen.

4. Verfahren nach Anspruch 3, dadurch **gekennzeichnet**, daß die positiven Impulse ($U_+$) eine solche zeitliche Länge aufweisen, daß der Intercalationsstrom beim Impulsende 0,1 bis 10 mA . cm$^{-2}$, insbesondere einige mA . cm$^{-2}$ beträgt und/oder daß die positiven Impulse ($U_+$) eine zeitliche Länge ($t_1$) von 0,2 bis 2 sec, vorzugsweise 0,3 bis 1,3 sec und insbesondere etwa 0,8 sec aufweisen.

5. Verfahren nach Anspruch 3 oder 4, dadurch **gekennzeichnet**, daß die negativen Impulse eine zeitliche Länge ($t_2$) von 1 bis 5 sec, vorzugsweise 1 bis 2 sec und insbesondere etwa 1 sec aufweisen und/oder daß die Meßelektrode (11) zwischen jedem negativen Impuls ($U_-$) und dem folgenden positiven Impuls ($U_+$) eine bestimmte Zeit ($t_3$) lang auf dem Basispotential ($U_0$) gehalten wird, wobei insbesondere die betreffende Zeit größer als 2 sec ist und insbesondere etwa 3 sec beträgt.

6. Verfahren nach einem der vorhergehenden Ansprüche, dadurch **gekennzeichnet**, daß die Meßelektrode (11) aus Acheson-Graphit, kunststoffgebundener Natur-Graphit, Natur-Graphit, pyrolytischem Graphit (HOPG) oder einem Verbundmaterial aus einem Kunststoffbinder und Naturgraphitflocken, insbesondere 80 % Naturgraphitflocken und 20 % Polypropylen, besteht, wobei vorzugsweise ein Gemisch aus Kunststoffbinder und Naturgraphitflocken extrudiert und danach in einer Warmpresse bei erhöhter Temperatur, insbesondere 190° C zu einer nichtporösen Platte verpreßt wird.

7. Verfahren nach einem der Ansprüche 1 bis 5, dadurch **gekennzeichnet**, daß die Meßelektrode aus synthetischen Metallen wie Poly-p-phenylen, Polypthiophen oder anderen leitenden Polymeren besteht.

8. Verfahren nach einem der vorhergehenden Ansprüche, dadurch **gekennzeichnet**, daß die Meßelektrode (11) zur Messung des Ladezustands eines Akkumulators, insbesondere eines mit Schwefelsäure als Elektrolyt gefüllten Bleiakkumulators verwendet wird und daß bei Verwendung eines flüssigen Elektrolyten die Meßelektrode (11) oberhalb des Plattensatzes (13) des Akkumulators angeordnet ist und gleichzeitig als Säurestandsmesser dient, wobei zweckmäßig die Elektroden in einem z.B. als Gel oder in einem Vlies festgelegten Elektrolyten angeordnet sind, und/oder daß es bei Säurekonzentrationen angewendet wird, die gleich oder größer sind als 0,2 Mol/l, wobei vorzugsweise in der Meßelektrode während der Messung eine Säurekonzentration von 0,5 bis 1 Mol/l vorhanden ist.

9. Meßelektrode zur Verwendung bei dem Verfahren nach einem oder mehreren der vorangehenden Ansprüche, dadurch **gekennzeichnet,** daß eine kristallines Graphit aufweisende Platte (11) an einer Öffnung (15) eines Gehäuses aus säurefestem Kunststoff dicht angeordnet und über eine Sperrplatte (16) aus rußgefülltem Kunststoff mit einem nach außen geführten Kupferleiter (17, 18) elektrisch leitend verbunden ist.

10. Vorrichtung zur Ausführung des Verfahrens nach einem oder mehreren der Ansprüche 1 bis 8, insbesondere mit einer Meßelektrode nach Anspruch 9, dadurch **gekennzeichnet**, daß ein mit der Meßelektrode (11) verbundener Potentiostat (13) bzw. Galvanostat (20) über einen D/A-Wandler (21) von einem Rechner (22) gesteuert ist und daß bei der galvanostatischen Methode gemäß den Ansprüchen 2 bis 5 die Potentiale der Meßelektrode (11) bezüglich der Gegenelektrode (26) und ggfs. einer Bezugselektrode (23) bzw. bei der potentiostatischen Methode nach den Ansprüchen 6 bis 13 der Strom durch die Meßelektrode über einen A/D-Wandler (24) an den Rechner (22) angelegt sind, an dessen Ausgang eine Ladezustandsanzeige (25) vorgesehen ist.

## Claims

1. Method of electrically measuring the concentration of acids wherein the concentration dependent electrochemical potential of a measurement electrode arranged in the acid and cooperating with an inert counter-electrode, which is likewise arranged in the acid, is measured relative to a suitable reference electrode and the concentration is derived therefrom, characterised in that a measurement electrode (11) consisting at least predominantly of crystalline graphite is arranged in an acid (12) with intercalatable anions; in that the measurement electrode (11) is intercalated in that an anodic current of a suitable size is directed through the measurement electrode (11); in that the current is maintained until the graphite intercalation compound has formed at the surface; in that the potential of the measurement electrode potential which arises at the start of the formation of the graphite intercalation compound is measured and used as a measure for the acid concentration; and in that, before the formation of a graphite intercalation compound arises which goes substantially beyond the surface, the current is reversed, or a negative potential is applied to the measurement electrode (11) of a size such that the measurement electrode (11) is deintercalated again and in that preferably the measurement electrode (11) is polarised in the anodic direction while measuring the potential with a constant low current density until a section is achieved which is very flat and in particular extends so flatly that the rise in potential within 0.2 sec lies below 5 mV ($dU/dt < 24$ mV/sec) with the potential ($U_1$) at which this occurs for the first time being used as a measure for the acid concentration; and in that deintercalation is subsequently effected with a constant low current density in the cathodic direction, with the current preferably being reversed after reaching the section where the potential remains constant.

2. Method in accordance with claim 1, characterised in that the current density amounts to 0.01 to 10 mA $\cdot cm^{-2}$, preferably to 1 to 3 mA $\cdot cm^{-2}$ and in particular to approximately 2 mA $\cdot cm^{-2}$ and/or in that a current-free pause of preferably several minutes, and in particular 5 minutes is provided after the deintercalation.

3. Method in accordance with claim 1, characterised in that a base potential ($U_0$) on which alternate positive and negative pulses ($U_+$, $U_-$) are superimposed is applied to the measurement electrode (11) and the resulting current is measured, with the base potential ($U_0$) being increased from a value where, on the occurrence of the positive pulse, no substantial formation of graphite intercalation compounds occurs, up to a value where, on occurrence of the positive pulse, an intercalation current ($i_0$) flows in jump-like manner; and in that the base potential ($U_0$) or the sum of the base potential ($U_0$) and the preferably constant positive pulse ($U_+$) is used as a measure for the concentration, wherein in particular the positive pulse

($U_+$) has an amplitude of 20 to 100 mV, preferably 30 to 70 mV and in particular of approximately 50 mV and/or the negative pulses ($U_-$) have an amplitude of 150 to 500 mV, preferably 150 to 250 mV and in particular of approximately 200 mV.

4. Method in accordance with claim 3, characterised in that the positive pulses ($U_+$) have a time length (duration) such that the intercalation current at the end of the pulse amounts to 0.1 to 10 mA $\cdot$ cm$^{-2}$, in particular a few mA $\cdot$ cm$^{-2}$ and/or in that the positive pulses ($U_+$) have a time length ($t_1$) of 0.2 to 2 sec, preferably 0.3 to 1.3 sec, in particular approximately 0.8 sec.

5. Method in accordance with claim 3 or 4, characterised in that the negative pulses have a time length ($t_2$) of 1 to 5 sec, preferably 1 to 2 sec and in particular of approximately 1 sec and/or in that the measurement electrode (11) is kept at the base potential ($U_0$) for a specific time ($t_3$) between each negative pulse ($U_-$) and the subsequent positive pulse ($U_+$) wherein in particular the relevant time is larger than 2 sec and amounts in particular to approximately 3 sec.

6. Method in accordance with any one of the preceding claims, characterised in that the measurement electrode (11) consists of Acheson-graphite, plastic-bound natural graphite, natural graphite, pyrolytic graphite (HOPG) or a composite material comprising a plastic binder and natural graphite flakes, in particular 80% natural graphite flakes and 20% polypropylene, wherein preferably a mixture of plastic binder and natural graphite flakes is extruded and then pressed in a hot press at elevated temperature, in particular 190°C into a non-porous plate.

7. Method in accordance with one of the claims 1 to 5, characterised in that the measurement electrode comprises synthetic metals such as poly-p-phenylene, polypthiophene or other conducting polymers.

8. Method in accordance with one of the preceding claims, characterised in that the measurement electrode (11) is used to measure the state of charge of an accumulator, in particular a lead accumulator filled with sulphuric acid as electrolyte and in that when using a liquid electrolyte, the measurement electrode (11) is arranged above the plates (13) of the accumulator and simultaneously serves as an acid level measuring device, wherein expediently the electrodes are arranged in a fixed electrolyte, for example an electrolyte in the form of a gel or fixed in a fleece and/or in that it is used at acid concentrations which are the same as or larger than 0.2 mol/l, with an acid concentration of 0.5 to 1 mol/l preferably being present in the measurement electrode during the measurement.

9. Measurement electrode for use in the method in accordance with one or more of the preceding claims, characterised in that a plate (11) having a crystalline graphite is sealingly arranged at an opening (15) of a housing of acid resistant plastic and is electrically conductively connected via a blocking plate (16) of carbon filled plastic with an outward leading copper conductor (17, 18).

10. Apparatus for carrying out the method in accordance with one or more of the claims 1 to 8, in particular with a measurement electrode in accordance with claim 9, characterised in that a potentiostat (13) or galvanostat (20) connected to the measurement electrode (11) is controlled via a digital/analog converter (21) from a computer (22); and in that, with the galvanostatic method, according to claims 2 to 5 the potentials of the measurement electrode (11) relative to the counter-electrode (26) and optionally a reference electrode (23), or, in the potentiostatic method in accordance with claims 6 to 13, the current through the measurement electrodes are applied via an analog/digital converter (24) to the computer (22) at the output of which a charge state indication (25) is provided.

## Revendications

1. Méthode de mesure électrique de la concentration d'acides, dans laquelle on mesure par rapport à une électrode de référence appropriée,le potentiel électrochimique, dépendant de la concentration, d'une électrode de mesure disposée dans l'acide, coopérant avec une contre-électrode inerte également disposée dans l'acide, et on en déduit la concentration,

caractérisée en ce qu'on dispose une électrode de mesure (11) constituée au moins principalement de graphite cristallin dans un acide (12) comprenant des anions intercalables, on intercale l'électrode de mesure (11) en faisant passer un courant anodique de grandeur donnée dans cette électrode (11), on entretient le courant jusqu'à ce que le composé d'intercalation du graphite se soit formé en surface, on mesure le potentiel de l'électrode de mesure s'établissant au début de la formation du composé d'intercalation du graphite et on l'utilise comme mesure de la concentration en acide, et en ce que, avant que la formation du composé d'intercalation de graphite s'étende notablement sur la surface, on inverse la polarité du courant et on applique à l'électrode de mesure (11) un potentiel négatif de grandeur telle que l'électrode de mesure (11) se retrouve désintercalée, et que de préférence l'électrode de mesure (11) est polarisée dans la direction anodique avec mesure du potentiel sous faible densité de courant constante jusqu'à ce que soit atteint un tronçon qui soit d'allure très plate et notamment assez plate pour que l'accroissement de potentiel tombe en 0,2 s en-dessous de 5 mV (dU/dt < 25 mV/s), le potentiel ($U_1$) pour lequel cette chute s'accomplit pour la première fois étant utilisé comme mesure de la concentration en acide, et en ce que, de préférence, la désintercalation s'effectue ensuite dans la direction cathodique avec une faible densité de courant constante, le courant étant alors de préférence changé de polarité avec un potentiel restant constant après que le tronçon a été atteint.

2. Méthode suivant la revendication 1, caractérisée en ce que la densité de courant s'élève à une valeur de 0,01 à 10 mA.cm$^{-2}$, mieux encore à une valeur de 1 à 3 mA.cm$^{-2}$ et notamment à environ 2 mA.cm$^{-2}$ et en ce qu'une pose sans courant, de préférence de plusieurs minutes, en particulier de 5 minutes, est prévue après la désintercalation.

3. Méthode suivant la revendication 1, caractérisée en ce qu'on applique à l'électrode de mesure (11) un potentiel de base ($U_0$) auquel sont superposées des impulsions ($U_+$, $U_-$) alternativement positives et négatives et on mesure l'intensité résultante, le potentiel de base ($U_0$) étant alors élevé depuis une valeur pour laquelle, au moment de l'apparition de l'impulsion positive, il n'apparaît pas encore de formation notable de composés d'intercalation de graphite, jusqu'à une valeur pour laquelle, à l'apparition de l'impulsion positive, un courant d'intercalation ($i_0$) circule par à-coups, et en ce que le potentiel de base ($U_0$) ou la somme du potentiel de base ($U_0$) et de l'impulsion ($U_+$) positive de préférence constante est utilisée comme mesure de la concentration, les impulsions positives ($U_+$) présentant en particulier une amplitude de 20 à 100 mV, de préférence de 30 à 70 mV et notamment d'environ 50 mV, et/ou les impulsions négatives ($U_-$) présentent une amplitude de 150 à 500 mV, et de préférence de 150 à 250 mV et notamment d'environ 200 mV.

4. Méthode suivant la revendication 3, caractérisée en ce que les impulsions positives ($U_+$) présentent une durée telle que le courant d'intercalation à la fin de l'impulsion s'élève à une valeur de 0,1 à 10 mA.cm$^{-2}$, notamment à quelques mA.cm$^{-2}$ et/ou en ce que les impulsions positives ($U_+$) présentent une durée ($t_1$) de 0,2 à 2 s, de préférence de 0,3 à 1,3 s et notamment d'environ 0,8 s.

5. Méthode suivant la revendication 3 ou 4, caractérisée en ce que les impulsions négatives présentent une durée ($t_2$) de 1 à 5 s, de préférence de 1 à 2 s et notamment d'environ 1 s et/ou en ce que l'électrode de mesure (11) est maintenue, entre chaque impulsion négative ($U_-$) et l'impulsion positive ($U_+$) suivante, pendant un temps déterminé ($t_3$) au potentiel de base ($U_0$), la durée en question étant notamment supérieure à 2 s et s'élevant en particulier à environ 3 s.

6. Méthode suivant l'une des revendications précédentes, caractérisée en ce que l'électrode de mesure (11) est en graphite Acheson, en graphite naturel lié à une matière synthétique, en graphite naturel, en graphite pyrolytique (HOPG) ou en un matériau composite constitué d'un liant synthétique et de flocons de graphite naturel, notamment 80 % de flocons de graphite naturel et 20 % de polypropylène, et elle est formée de préférence par extrusion d'un mélange d'un liant synthétique et de flocons de graphite naturel qui est ensuite comprimé en une plaque non poreuse dans une presse fonctionnant à température élevée, en particulier à 190°C.

7. Méthode suivant l'une des revendications 1 à 5, caractérisée en ce que l'électrode de mesure est réalisée en métaux synthétiques tels que poly-p-phénylène, polythiophène ou autres polymères conducteurs.

8. Méthode suivant l'une des revendications précédentes, caractérisée en ce que l'électrode de mesure (11) est utilisée pour la mesure de l'état de charge d'un accumulateur, notamment de l'accumulateur au plomb rempli d'acide sulfurique comme électrolyte et en ce que lors de l'utilisation d'un électrolyte liquide, l'électrode de mesure (11) est disposée au-dessus du faisceau de plaques (13) de l'accumulateur et sert en même temps de jauge de mesure du niveau d'acide, les électrodes étant avantageusement disposées dans un électrolyte immobilisé par exemple sous forme de gel ou dans une nappe de fibres et/ou en ce qu'elle est utilisée à des concentrations en acide qui sont égales ou supérieures à 0,2 mole/l, une concentration d'acide de 0,5 à 1 mole/l étant de préférence présente dans l'électrode de mesure pendant la mesure.

9. Electrode de mesure destinée à être utilisée dans la méthode suivant une ou plusieurs des revendications précédentes, caractérisée en ce qu'une plaque (11) présentant du graphite cristallin est disposée de façon étanche au niveau d'une ouverture (15) d'un boîtier en matière plastique résistant aux acides et est reliée de façon à conduire l'électricité, par l'intermédiaire d'une plaque d'arrêt (16) en matière synthétique contenant une charge de noir de fumée, avec un conducteur (17, 18) en cuivre passant à l'extérieur.

10. Dispositif pour la conduite de la méthode suivant une ou plusieurs des revendications 1 à 8, comportant en particulier une électrode de mesure suivant la revendication 9, caractérisé en ce qu'un potentiostat (13) ou un galvanostat (20) lié à l'électrode de mesure (11) est commandé par l'intermédiaire d'un convertisseur numérique/analogique (21) par un ordinateur (22) et en ce que, dans le cas de la méthode galvanostatique suivant les revendications 2 à 5, les potentiels de l'électrode de mesure (11) par rapport à la contre-électrode (26) et le cas échéant à une électrode de référence (23), ou bien, dans la méthode potentiostatique suivant les revendications 6 à 13, le courant, sont appliqués par l'électrode de mesure par l'intermédiaire d'un convertisseur analogique/numérique (24) à l'ordinateur (22) à la sortie duquel est prévu un moyen (25) d'indication de l'état de charge.

# Fig. 1

# Fig. 2

# Fig. 3

# Fig. 4

19

U(t)

A / D  24

A / D  21

i(t)

23  26  11

22

25

Fig. 5

Fig. 6

Fig. 7

Fig. 8

29

30

31

26

11

23

IX

IX

Fig. 9

31

30

26

11

23

Fig. 10

$U_1$ (V)

1,5

1,0

0,5

0

0    2    4    6    8    C (Mol/l)

17